# EUROPEAN PATENT APPLICATION

(11) **EP 2 355 104 A1**
(43) Date of publication of application: **10.08.2011**
(21) Application number: 09179978.3
(22) Date of filing: 18.12.2009
(51) Int. Cl.: G11B 27/034, G11B 27/038, G11B 27/10, G10H 1/00, G10H 1/40, G10H 3/12

(54) **Apparatus and method for processing audio data**

(71) Applicant: Dublin Institute of Technology, Dublin 6 (IE)
(72) Inventor: Gainza, Mikel, Dublin 12 (IE)
(74) Representative: Lucey, Michael

(57) **Abstract**

An apparatus and a method are provided for automatically extracting a representative sample from audio data. The apparatus includes storage means and audio data processing means. The audio data processing means embody the method by comprising a plurality of audio data processing modules respectively for section processing, chromagram processing tempo processing and metre processing. Each module outputs a respective representative section and the audio data processing means combines the plurality of sections as the representative sample and stores the representative sample in the storage means as an artist/album thumbnail.

## Description

### Field of the Invention

The present invention relates to an apparatus and a method for processing audio data. More particularly, the present invention relates to an apparatus and a method for automatically extracting a representative sample from audio data.

### Background to the Invention

In the field of melodic audio data, for example songs, a specific section of a song usually represents the most meaningful part of the piece of music and vocals to its listeners. This specific section can be a single occurrence in the song, or may be repeated at intervals, for example as a chorus. This is generally the most memorable section of the song, that audio segment which, due to its straight lyrical message and captivating melody, listeners can quickly learn, repeat and assimilate.

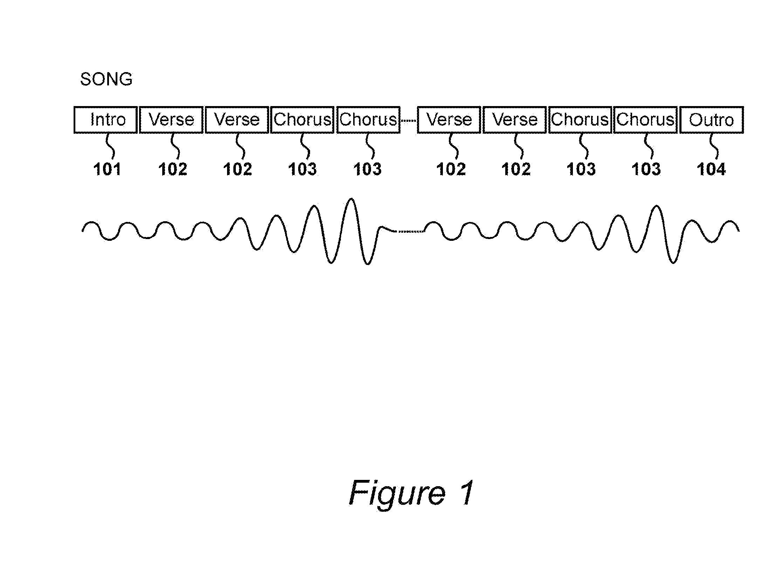

Figure 1 provides a graphic illustration of a typical structure of a song, which comprises an introduction 101, verses 102, choruses 103 and an ending section 104 generally termed as an 'outro', and which combines voice and instrumentation.

Techniques are known to allow listeners to sample an arbitrary section of limited duration of a song for ulterior purposes, for instance a purchase, particularly in network - distributed environments such as online music stores. The arbitrary section may often be the introduction 101 to the song, which may contain no vocals 102, 103, thus giving the listener no indication of the lyrical content. The section may be arbitrarily chosen by the artist, by its publisher or by the distributed service provider. The section may also be chosen by a recommendation module, which is integral to the technology platform of the distributed service provider, and the output of which is based upon user input or external data, such as sales data or listening charts data or the like. Throughout the above, the section or sample is not representative of the song, and the sample listener could abandon any ulterior action based on this initial experience, for instance the purchase or the data transfer or the data processing for listening to the song. The accurate identification of audio data, based on a listening experience of non*-representative samples, therefore remains needlessly difficult and time-consuming.

The same problem affects users of professional audio archives and personal music collections, for essentially the same reason. There have been many efforts by the audio research community, to try and solve the problem of allowing users, who query local and/or remote music databases or collections, to quickly and accurately peruse the query results. Query results are generally still presented to users as a list of possible matches to a specific query, complete with links to remote or local audio data corresponding to arbitrary samples as previously discussed. For example, a recent digital music application such as the "Media Monkey" software media player provides its users with the option to create song 'previews'. However, this 'preview' has to be generated manually, which is a very slow process for big collections of music. In the case of a user accessing a music archive, the wealth of musical information represented by the query results is still impractical if users do not have sufficient time to listen to and analyse each presented result, in order to validate the accuracy of the query and/or relevance of the results.

Several methods are known, which attempt to detect the chorus part of a song. For instance Bartsch et al in "Audio Thumbnailing of Popular Music Using Chroma-Based Representation" (IEEE Trans. on Multimedia, vol. 7, no. 1, Feb. 2005, pp. 96-104), Goto in "A Chorus Section Detection Method for Musical Audio Signals and Its Application to a Music Listening Station" (IEEE Trans. on Audio, Speech, and Language Processing, vol. 14, no. 5, Sept. 2006 pp. 1783 - 1794) and Eronen et al in "Chorus detection with combined use of mfcc and chroma features and image processing filters" (Proc. of the 10th Int. Conference on Digital Audio Effects (DAFx-07) 2007). These techniques essentially rely on the accuracy of a chromagram representation. However, an inaccurate representation of the chromagram, caused for instance by transients, noise and/or instrumentation, tonalities and metrical characteristics variations, will lead to inaccurate and unsatisfactory results.

Existing audio thumbnail generation algorithms are solely based on the automatic extraction of an audio segment that best represent a piece of music, such as the chorus part of the song. However, there are many scenarios in which other type of audio thumbnails might be of more benefit to the user. Currently, a consumer accessing an online music vendor such as "itunes store" has to first find an artist of interest. Then, in order to sample the artist music the user has to select the albums individually and then sample the album's songs. If the user does not randomly sample the right song thumbnails or does not take the necessary time to go through this slow music discovery process, he/she might quickly lose the interest in the music purchase.

An improved method is required, which will preferably rely upon multiple hypotheses and signal representations, so that inaccuracies in the representation of the chromagram can be overcome through redundancy and/or weighing by alternative audio data processing techniques for representing audio thumbnails.

### Summary of the Invention

According to a first aspect of the present invention, there is provided an apparatus for automatically extracting a representative sample from input audio data, comprising storage means and audio data processing means, including
a section processing module for identifying audio thumbnail candidates,
a spectrogram processing module for identifying a first representative sample of the input audio,
a metre processing module for identifying a second representative sample of the input audio data, and
wherein each module identifies the representative sample in parallel, and outputs a respective representative sample; and
the audio data processing means combines the plurality of samples as the representative sample and stores the representative sample in the storage means.

An advantage of the invention is that an audio thumbnail does not necessarily have to correspond to just a representation of a single song. Thus, users can sample unique thumbnails of an album or an artist discography in a single audio file. This new type of audio thumbnail should contain small fragments of the most representative song thumbnails of an album or artist discography, which are seamlessly blended together, such that the transition between song thumbnails is performed in a continuous fashion. As an example, in the above described online music vendor scenario users could explore a vast music catalogue by sampling in a short space of time different artist/album thumbnails until the music played to the user satisfies his/her musical taste.

The apparatus provides processing means to cross fade successive thumbnail candidates, wherein thumbnail candidate amplitude levels are matched with each other.

The section processing module preferably comprises means to track both changes in instrumentation and song dynamics present in the audio data and/or means to detect only frames within a beat segment that do not contain transient signals.

The chromagram processing module preferably provides beat chromagram representation which only uses frames that do not contain transient signals. The beat chromagram representation utilises a pitch detection algorithm in order to detect the lowest note in pitch present in audio data, such that noise introduced by percussive instruments in the low frequency range are discarded.

The metre processing module comprises a representation that encodes the different metrical levels of audio data, such that said representation is robust to tempo changes and allows accurate comparison between different meter vectors.

The apparatus advantageously evaluates multiple hypotheses for a representative sample in parallel, such that it needs not rely upon the accuracy of a single distribution or representation of the content of a music signal.

The audio data preferably includes at least one song. Alternatively, the audio data may include any of several songs, an album of songs or a plurality of albums of an artist, the entire discography of an artist, or songs of several artists. Any plurality of songs selected as audio input data may be logically or thematically associated with one another. For instance, the audio data may include all or certain songs of a particular album of a particular artist. If an entire album composed by several songs is chosen as the input to the apparatus, a single representative sample for the entire album will be automatically generated. The same principle applies to the automatic generation of a representative sample, which describes the music of a given artist, so wherein the input audio data may include all or certain songs of a particular artist, regardless of the album they were released on. Alternatively still, the audio data may include all or certain songs of a particular genre, type, geographical location, era and the like. Any and all such permutations are envisaged. The apparatus advantageously outputs a single representative sample of the audio data, regardless of the number of discrete songs represented by the audio data input to the apparatus

The audio data may include analogue or digital audio data. The parallel processing structure allows the apparatus to evaluate multiple hypotheses for a representative sample in real time and to advantageously output a representative sample of a live audio feed or stream, which remote terminal users may then obtain while the performance is still ongoing, for instance to decide whether to download the live audio feed or stream.

The apparatus may further comprise optical data reading and writing means, wherein digital audio data may be obtained from the optical data reading means and the representative sample may be output to the optical data writing means.

The apparatus may further comprise communication means, wherein digital audio data may be obtained from at least one remote terminal means and a representative sample may be communicated to at least one remote terminal via the communication means.

The section processing module preferably identifies a first representative sample of the input audio data by detecting variations in instrumentation and song dynamics across the audio data.

The chromagram processing module preferably identifies a representative sample of the input audio data by detecting variations in, and tracking similarities in, tonalities across the audio data.

The metre processing module preferably identifies a representative sample of the audio data by measuring and comparing metrical characteristics across the audio data. According to a second aspect of the present invention, there is provided a method for automatically extracting a representative sample from input audio data, comprising the steps of
identifying a plurality of candidate representative samples of the input audio data in parallel,
wherein the step of identifying comprises a step of section processing, a step of chromagram processing, and a metre processing, each outputting a respective candidate representative sample,
combining the plurality of respective samples as the representative sample, and storing the representative sample.

The step of section processing preferably comprises a further step of detecting variations in instrumentation and song dynamics across the audio data.

The step of chromagram processing preferably comprises further steps of detecting variations in, and tracking similarities in, tonalities across the audio data.

The step of metre processing preferably comprises a further step of detecting metrical transitions across the audio data.

The method may further comprise a step of receiving a remote request for at least one representative sample. The method may then comprise a still further step of replying to the request with a stored representative sample.

According to a third aspect of the present invention, there is provided a computer readable medium having instructions encoded thereon which, when processed by a data processing apparatus, generate a machine state for performing the method described above.

### Brief Description of the Drawings

An apparatus and a method for automatically extracting a representative sample from audio data will now be described by way of example only and with reference to the accompanying drawings, in which:
Figure 1 provides a graphic illustration of a typical structure of a song;
Figure 2 shows an environment in which a terminal including an apparatus according to the invention receives input audio data and communicates output audio data to remote terminals;
Figure 3 provides a graphic illustration of a typical structure of the terminal including an apparatus according to the invention of Figure 1 and including a memory;
Figure 4 provides a graphic illustration of the apparatus of Figures 2 and 3;
Figure 5 details the procedural steps according to which the terminal and apparatus of Figures 2 to 4 operate, including a step of processing input audio data;
Figure 6 illustrates the procedural step of processing input audio data according to a first embodiment of the present invention, including parallel steps of section processing, chromagram processing and meter processing;
Figure 7 provides a graphic illustration of the contents of the memory of Figure 3 during operation of the apparatus of Figures 2 to 4 according to the steps of Figures 5 and 6;
Figure 8 further details the section processing of Figure 6;
Figure 9 further details the chromagram processing of Figure 6;
Figure 10 further details the metre processing of Figure 6;
Figure 11 illustrates the procedural step of processing input audio data according to a second embodiment of the present invention, wherein respective steps are represented by functional modules including section detection and chromagram and metergram analyses;
Figure 12 provides a graphic illustration of the section detection module of Figure 11;
Figure 13 provides a graphic illustration of the chromagram analysis of Figure 11;
Figure 14 provides a graphic illustration of the metergram analysis of Figure 11, including an onset detection function;
Figure 15 provides a graphic illustration of an example of the use or the metergram module of Figure 14;
Figure 16 illustrates the process of extracting an album thumbnail from a group of songs according to the second embodiment of the present invention, wherein respective steps are represented by functional modules;
Figure 17 further details the combination of multiple song thumbnails into a unique album thumbnail including a cross-fading function;
Figure 18 provides a graphic illustration of the cross-fading function of Figure 17;
Figure 19 details the procedural steps according to which a remote terminal of Figure 2 requests output audio data from the terminal including an apparatus according to the invention; and
Figure 20 provides a graphic illustration of stored output audio data.

### Detailed Description of the Drawings

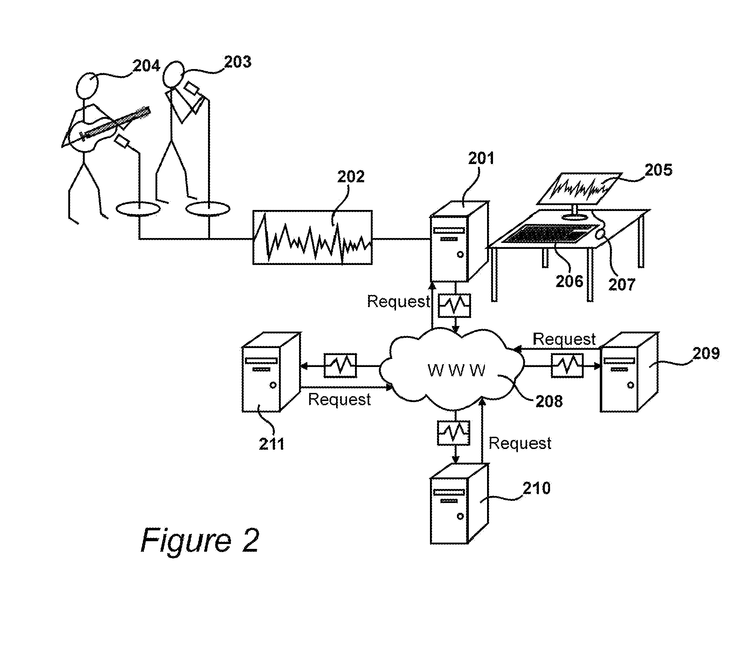

An environment is shown in Figure 2, in which a terminal 201 including, according to a first embodiment, an apparatus according to the invention receives analogue input audio data 202 from a musical performance involving a singer 203 and a musician 204. Terminal 201 is a data processing terminal having a visual user interface displayed on a video display unit 205 and receiving user input from conventional keyboard 206 and mouse 207. Terminal 201 includes network communication means connecting it to a local or wide area network, in the example the Internet 208.

In the example, remote terminals 209, 210, 211 are substantially similar in structure, functionality and connectivity to terminal 201, save as to the apparatus according to the invention. Remote terminals 209, 210, 211 are also connected to the Internet 208 and there is therefore the scope for any of terminals 201, 209, 210, 211 to communicate data with one another.

In the example, terminal 209 is operated by an online music retailer offering digitized audio data for purchase to remote terminal users; terminal 210 is operated by a music researcher querying local and/or remote music databases and terminal 211 is operated by a private user searching the Internet 208 for live digitzed musical performances.

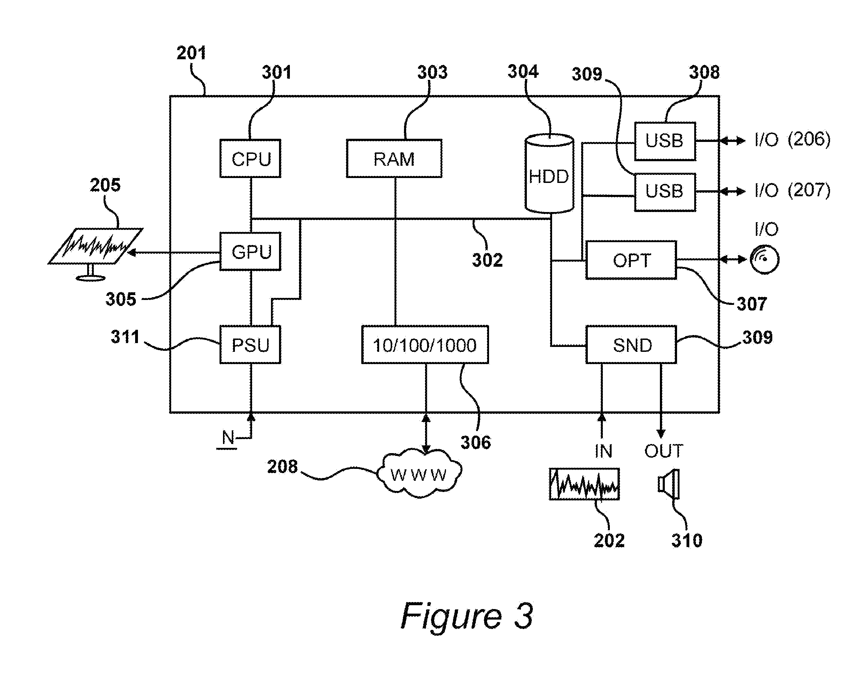

Typical constituent parts of terminal 201 are shown by way of non-limitative example in Figure 3. Terminal 201 includes a central processing unit 301 connected to a bus 302, which interfaces CPU 301 to the remaining elements of terminal 201. These include a random access memory 303 which stores instructions and data in use by CPU 301 at any given moment; permanent data storage 304 such as a hard disk drive; a graphics processing unit 305 which outputs video data to VDU 205; and a network interface unit 306 which connects terminal 201 to a local area network or the Internet 208 for receiving remote data from remote terminals and broadcasting local data to same. Elements also include input/output components such as an optical drive 307 for reading data and/or instructions from optical media and writing data thereto, and one or more universal serial bus port 308, in the example connected to keyboard 206 and mouse 207, for receiving user input data therefrom.

Terminal 201 includes audio data processing means 309 for performing standard audio data processing such as receiving and digitizing analogue audio data 202 and outputting analogue audio data to soundwave-reproducing equipment, for instance speakers 310. According to a first embodiment of the invention, means 309 further includes an apparatus for automatically extracting a representative sample from audio data according to the present invention.

All the components of terminal 201 are powered by a power supply unit 311 which receives electrical power from mains input and transforms same according to component ratings and requirements.

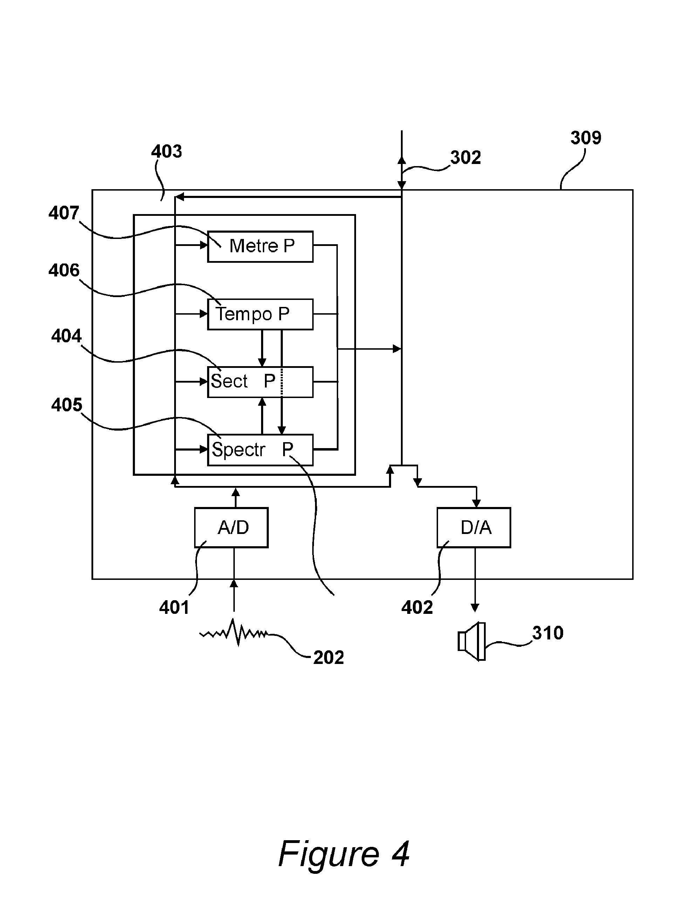

Audio data processing means 309 is shown in further detail in Figure 4, and includes an analogue to digital converter 401 for digitizing the live audio data 202 received from the performance, as well as a digital to analogue converter 402 for converting digital data into a soundwave reproducible by speakers 310. According to a first embodiment of the present invention, means 309 further include an apparatus 403, which comprises a plurality of respective audio data processing modules for extracting representative samples according to the invention. Apparatus 403 includes a section processing module 404, a chromagram processing module 405, a tempo processing module 406 and a meter processing module 407. Modules 404, 405, 406 and 407 are configured for parallel operation, and may receive input data from the ADC 401, or from CPU 301 and/or RAM 303 over bus 302, and will be explained below in further detail.

According to a second embodiment of the present invention, apparatus 403 is embodied as instructions for CPU 301, whereby each of modules 404, 405, 406 and 407 exist in RAM 303 as a state machine, rather than as solid state components in audio data processing means 309.

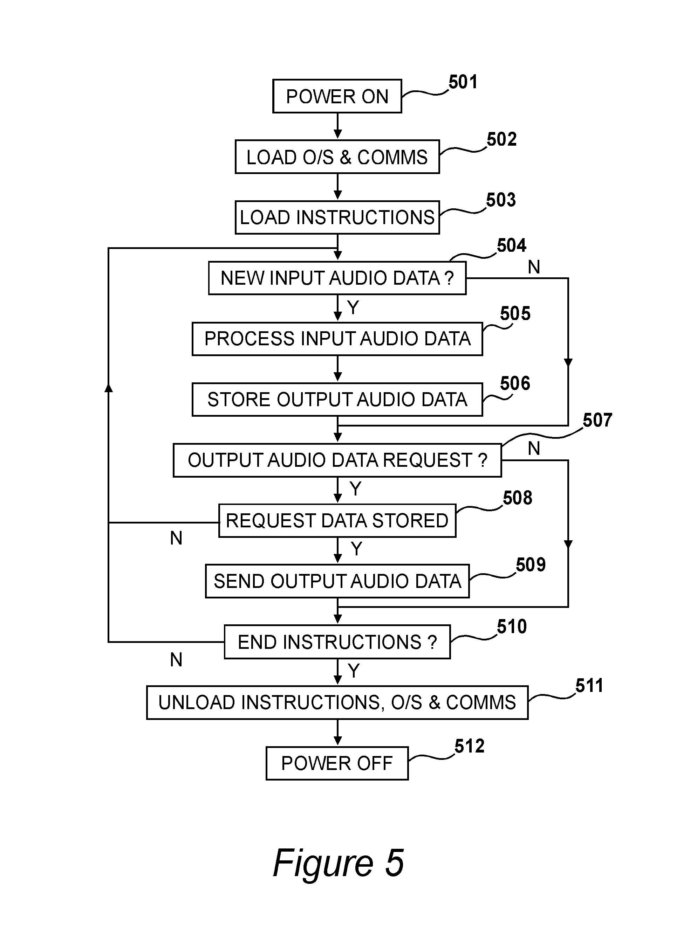

Steps according to which terminal 201 including apparatus 403 operates according to the present invention are summarised in Figure 5. Terminal 201 is initially powered on at step 501, whereby the operating system is loaded in memory 303 from permanent storage 304 for configuring terminal 201 with essential functionality, including network connectivity, at step 502. Instructions are loaded at step 503 which, depending on the embodiment of apparatus 403, are either driver instructions for apparatus 403 within means 309 or instructions for CPU 301 establishing apparatus 403 as a machine state within RAM 303.

A first question is asked at step 504, as to whether any new input audio data has been received, for instance live performance data 202, stored performance data from an optical medium via drive 307 or from permanent storage 304, or from a remote terminal via NIC 306. If the question is answered positively, then the input audio data is processed according to the present invention at step 505, which will be further detailed below and the resulting output audio data is stored at step 506 in any manner selected by the user of terminal 201, so for instance to an optical medium via drive 307, to permanent storage 304 or to a remote terminal via NIC 306.

The output audio data comprises extracted samples which are representative of, depending on the type and/or amount of input audio data, the most meaningful part of a song or the most meaningful part of each in a group of songs. Each sample has a length governed by the final user application. For example, album samples within a home user local library might be used as a quick reminder of the sound of the user library albums. In this case, the length of the representative sample might be limited to 2 musical bars. In contrast, in an online music store 209, an album sample might provide a longer number of musical bars for each song of the album.

Control proceeds to a second question at step 507, as to whether any request has been received for output audio data, either locally or from a remote terminal 209, 210, 211. Control likewise proceeds to the question of 507 if the question of step 504 is answered negatively. If the question of step 507 is answered positively, then a third question is asked at step 508, as to whether the requested output audio data is already stored. If this third question is answered negatively, control returns to step 504, at which new input audio data should be obtained, then processed and stored according to steps 505 and 506, until such time as question 508 can be answered positively and the requested output audio data can be sent to the requesting terminal at step 509.

Control proceeds to a fourth question at step 510, as to whether processing of the instructions loaded at step 503 should now be interrupted, for instance if terminal 201 must be switched off. Control likewise proceeds to the question of 510 if the question of step 507 is answered negatively. If the question of step 510 is answered negatively, control returns to step 504, at which new input audio data should be obtained then processed and stored according to steps 505 and 506 and/or new output audio data requests should be received and replied to, and so on and so forth. Alternatively, if the question of step 510 is answered positively, then the instructions of step 503 may be unloaded from RAM 303 and, optionally, also the operating system at step 511, whereby the terminal 201 is finally switched off at step 512.

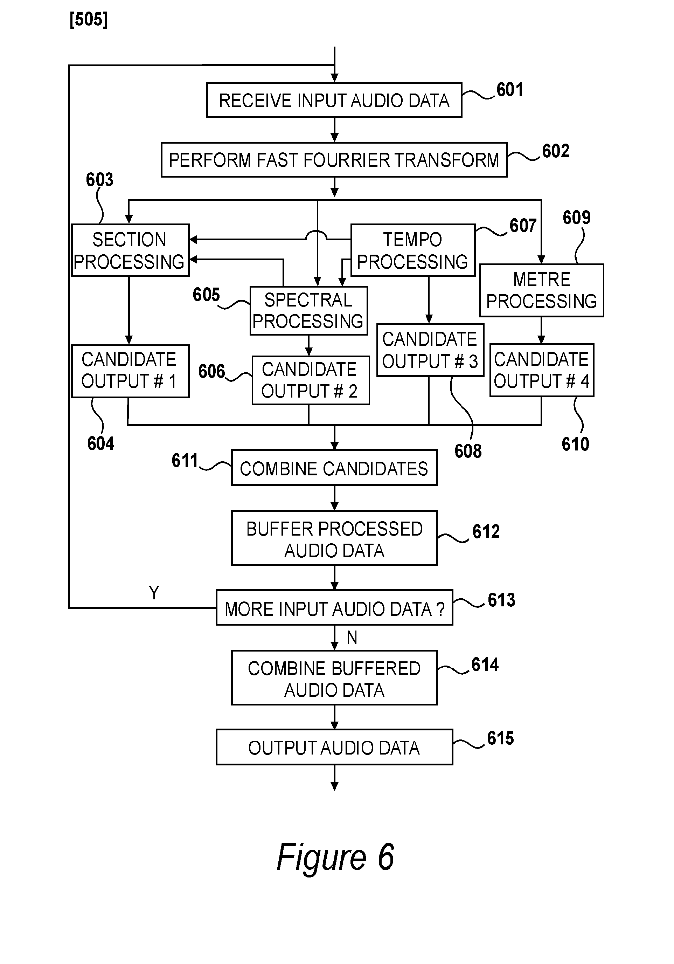

The step 505 of processing input audio data according to the present invention is further detailed in Figure 6, as a sequence of further sub-steps. Input audio data is received by the apparatus 403 at step 601, and subjected to a Fast Fourrier Transformation at step 602. The output of the transformation is then communicated to four distinct parallel sub-processes at substantially the same time. With reference to the embodiment shown in Figure 4, the output of step 602 is communicated to modules 404, 405, 406, 407. In a machine state embodiment, the output of step 602 is communicated to four parallel routines, which are preferably processed by a respective core of a multicore CPU 301, for instance an Intel Pentium Quad Core microprocessor.

Section processing is performed upon the input audio data at step 603, which outputs a first candidate representative sample of the input audio data at step 604. The processing of step 603 receives input from the parallel step 605 of chromagram processing upon the same input audio data, which outputs a second candidate representative sample of the input audio data of step 606. The processing of each of step 603 and 605 receives input from the parallel step 607 of tempo processing upon the same input audio data, which outputs a third candidate representative sample of the input audio data of step 608. Metre processing is performed upon the input audio data at step 609, which outputs a fourth candidate representative sample of the input audio data at step 610.

Each of the four candidate representative samples of the input audio data are combined at step 611 into a most representative sample of the input audio data. The most representative sample of the input audio data is subsequently buffered at step 612 and a question is asked at step 613, as to whether any more input audio data needs to be processed by the four modules for extracting a representative sample of the input audio data, for instance if the input audio data comprises several songs.

If the question of step 613 is answered positively, control is returned to step 601, at which the further input audio data is received for subsequent processing according steps 602 to 612. When the question of step 613 is answered negatively, either in the case of a single song or as and when all required songs constituting the input audio data have been processed, the buffered most representative samples of the input audio data are combined at step 614 and a unique representative sample of the input audio data is output at step 615 for storing at step 506. If the input audio data comprises several songs, the combining step 614 mixes the representative samples of each song together using cross-fading techniques, which ensure a smooth transition between audio respective representative samples. In addition, amplitude levels of representative samples are monitored in order to avoid signal clipping and to assist amplitude matching between the constituent representative samples of the resulting mix. The length of the cross faded section between each two successive representative samples in the mix will be set by using the shortest beat period of the two representative samples.

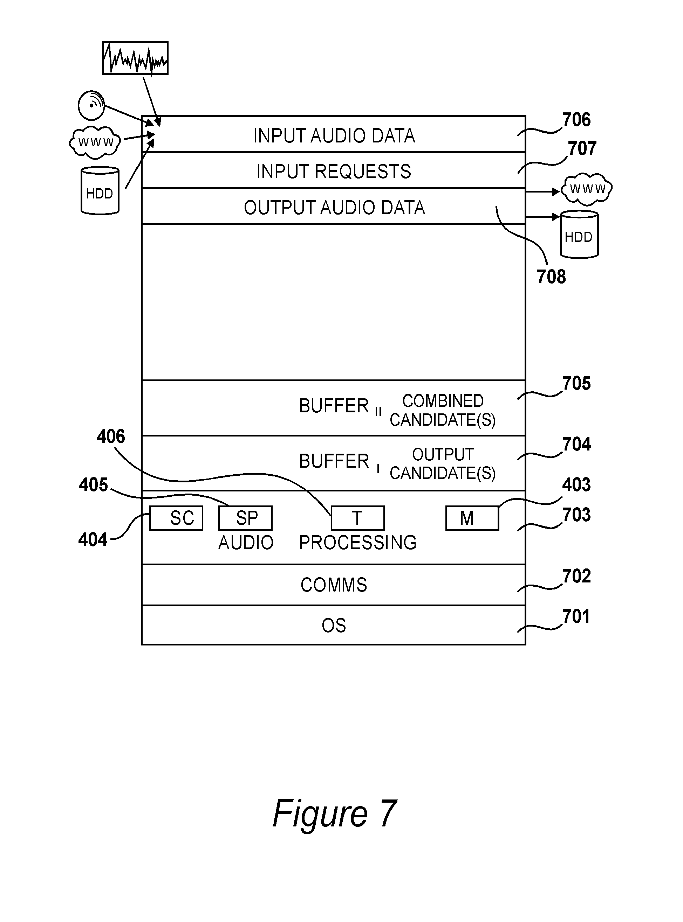

The iterative processing of steps 504 to 510, and of steps 601 to 615 as a part thereof, by CPU 301 and apparatus 403 generates and uses an amount of data, which is stored in memory 303 while ever question 510 remains answered negatively. The contents of memory 303 are shown by way of non-limitative example in Figure 7.

The operating system and essential connectivity instructions loaded at step 502 are shown at 701, 702. The instructions loaded at step 503 are shown at 703, which comprise either driver instructions for CPU 301 for the embodiment of apparatus 403 shown in Figure 4, or instructions for CPU 301 embodying a state machine 703 within RAM 303 corresponding to apparatus 403. A first buffer is shown at 704, in which the combined representative samples output at steps 604, 606, 608 and 610 are stored in readiness for the combining step 611. A second buffer is shown at 705, in which each of the most representative samples output at step 611 are stored in readiness for the combining step 614, whenever question 613 is answered positively. Input audio data is shown at 706 which comprises any of live performance data 202, stored performance data from an optical medium via drive 307 or from permanent storage 304 or from a remote terminal via NIC 306. Input requests are shown at 707, which comprise data queries received from a local user or remote terminals, 209, 210, 211. Output audio data is shown at 708, which comprises representative samples output at step 615 and optionally organised in a database, which is also stored in permanent storage 304 and periodically updated according to step 506.

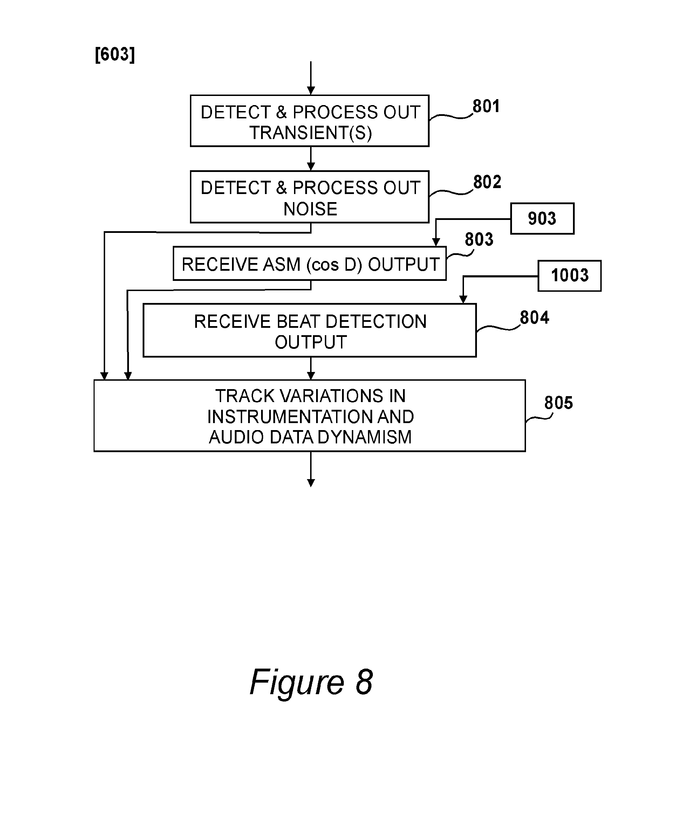

The step 603 of section processing, amounting to the functionality of hardware module 404, according to the present invention is further detailed in Figure 8, as a sequence of further sub-steps.

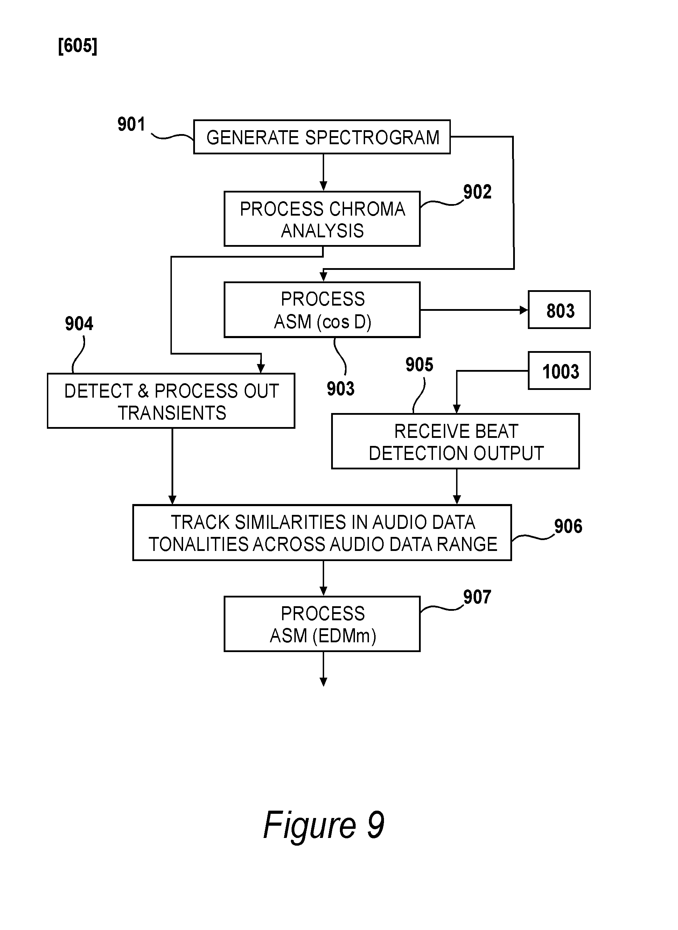

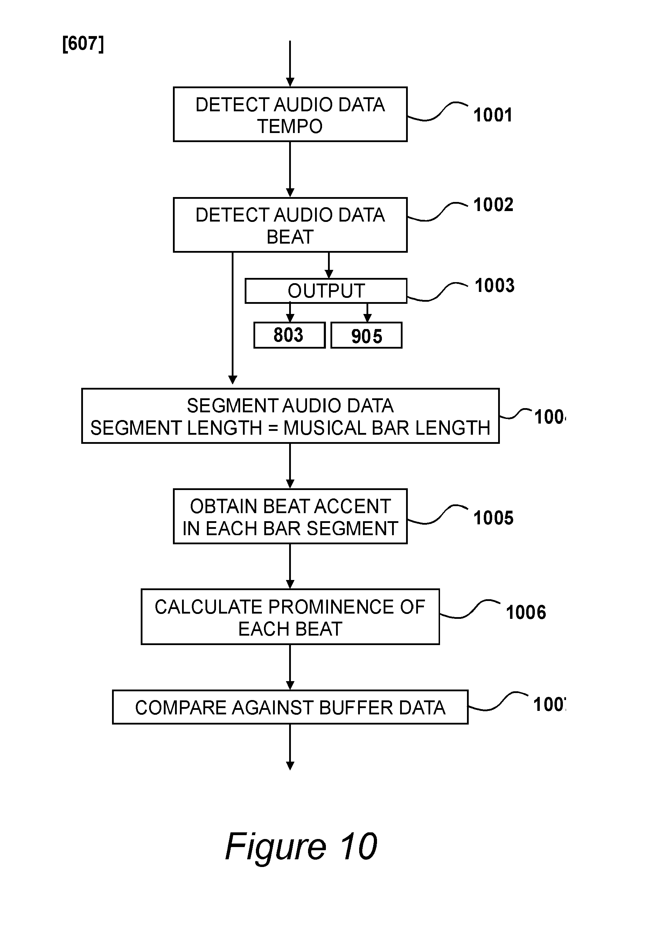

At step 801, any transient present in the audio stream is or are detected and processed out. At step 802, any noise present in the audio stream is detected and processed out. With reference to Figure 9, the output of step 903, which is an Audio Similarity Matrix generated using the cosine distance measure, is received at step 803 and, with reference to Figure 10, the detected audio data beat output of step 1003 is received at step 804. At step 805, variations in instrumentation and song dynamics of the transient-less and noiseless input audio data are tracked according to the received ASM and the detected audio data beat, and the first candidate representative sample eventually output at step 604.

The step 605 of chromagram processing, amounting to the functionality of hardware module 405, according to the present invention is further detailed in Figure 9, as a sequence of further sub-steps.

At step 901, a spectrogram is generated according to conventional techniques and a chromatographic analysis subsequently performed at step 902. The spectrogram is separately processed for generating an Audio Similarity Matrix generated using the cosine distance at step 903 for output to the section module and step 803 thereof. Step 904 follows the chromatograph analysis of step 902 and any transient present in the audio stream is or are again detected and processed out. With reference to Figure 10, the detected audio data beat output of step 1003 is received at step 905. At step 906, similarities in the audio data tonalities are tracked in different parts of the transient-less input audio data according to the received detected audio data beat. The output of the tracking process is processed for generating an Audio Similarity Matrix generated using the Euclidian distance measure at step 907 and the second candidate representative sample eventually output at step 606.

The step 607 of tempo processing, amounting to the functionality of hardware module 406, according to the present invention is further detailed in Figure 10, as a sequence of further sub-steps.

At step 1001 the tempo of the input audio data is detected. At step 1002, the beat frequency of the input audio data is detected. At step 1003, the detected input audio data beat is communicated to the section module 404 for step 804 and to the spectral module 405 for step 905. Step 1004 also follows step 1002 and the input audio data is split by segments of length, which are equal to the musical bar length, and wherein each segment starts at the bar line position. At step 1005, the accents of the beats within each bar segment are obtained. At step 1006, a measure of the prominence of each beat subdivision is calculated, using either a compounded or simple metre technique. At step 1007, the calculation output is used to compare the metrical characteristics of different candidate representative samples at different parts of the input audio data until a third candidate representative sample is eventually output at step 608.

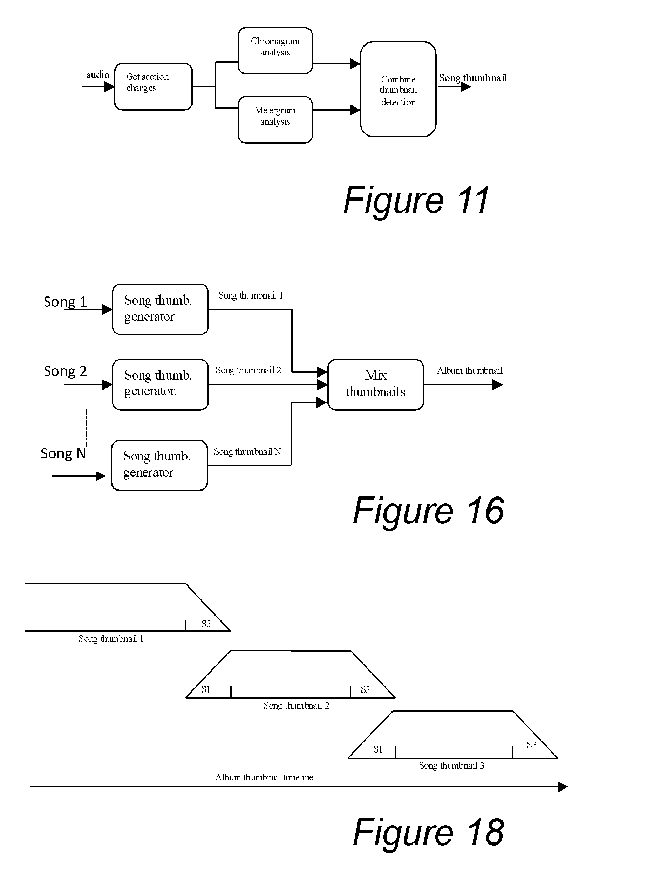

A second embodiment of the apparatus 403 is shown in Figure 11, as a logic diagram of data processing functions. According to the logic, audio is first processed for section detection, in order to identify structural section changes which can correspond to the beginning of an audio thumbnail. Both chromagram and metergram analyses are performed in order to track similarities in, respectively, the tonality and the metrical properties of the input audio data. The results of both analyses for each candidate, herein after a 'thumbnail' candidate, are combined in order to estimate a single audio thumbnail candidate.

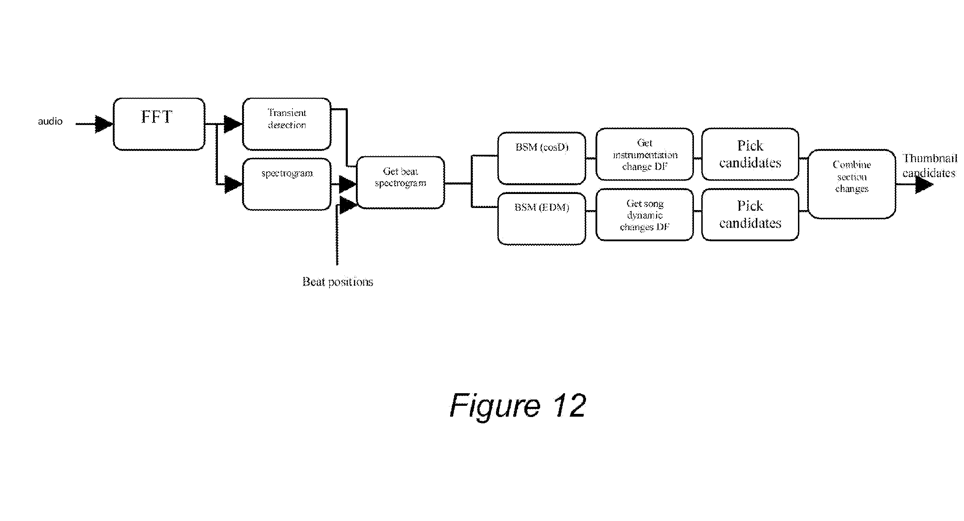

The section detection is shown in further details in Figure 12. The identification of structural section changes is carried out by performing a Fourier transform in each single frame of the analysis. A transient detection algorithm is also used, which detects the frames in which broad band transient signals are present. A spectrogram is also generated, by storing the magnitude response of the spectrum of each audio frame. A beat spectrogram is generated, which combines together the spectrogram frames of each individual beat. The only frames used within the beat segment are those which do not contain transient signals.

Two different beat similarity matrices are then generated using two different distance measures, wherein BSM(cosD) and BSM(EDM) respectively denote a Beat Similarity Matrix generated using the cosine distance measure and the Euclidian distance measure. The BSM(cosD) measure is a more suitable representation to track timbre changes that occur in the audio signal, when new instrumentation is added to a new section of the audio data. In contrast, the BSM(EDM) measure is more suitable to changes in the song dynamics that can occur when a new chorus arises in the audio data. Instrumentation changes are detected by generating a detection function, which is the result of the correlation of the main diagonal of the BSM(cosD) with a checkerboard kernel of length equal to 32 beats. This kernel length corresponds to the typical length of a section comprised by 8 musical bars with 4 beats in each bar. Then, peak picking is performed in the instrumentation change detection function, in order to select the beat positions that correspond to a prominent instrumentation change separated by less than 32 beats from other instrumentation change peaks.

Dynamic changes in the song are detected by generating a different detection function. The difference between each beat and the previous 32 beats is extracted from the BSM(EDM). This information is weighted by a three-dimensional Gaussian window, which weights more changes occurring between closely - spaced musical beats. Peak picking is performed in the dynamic change detection function, in order to select the most prominent instrumentation changes separated by less than 32 beats from other song dynamic change peaks.

Finally, beat positions corresponding to both instrumentation and song dynamic changes are combined. In order to allow deviations in the detection, beats separated by less than a musical bar from the estimated section candidates will also be considered as thumbnail candidates.

The section detection therefore tracks changes both in instrumentation and song dynamics, wherein only frames within the beat segment that do not contain transient signals are used in the analysis, this increasing the accuracy of the representation.

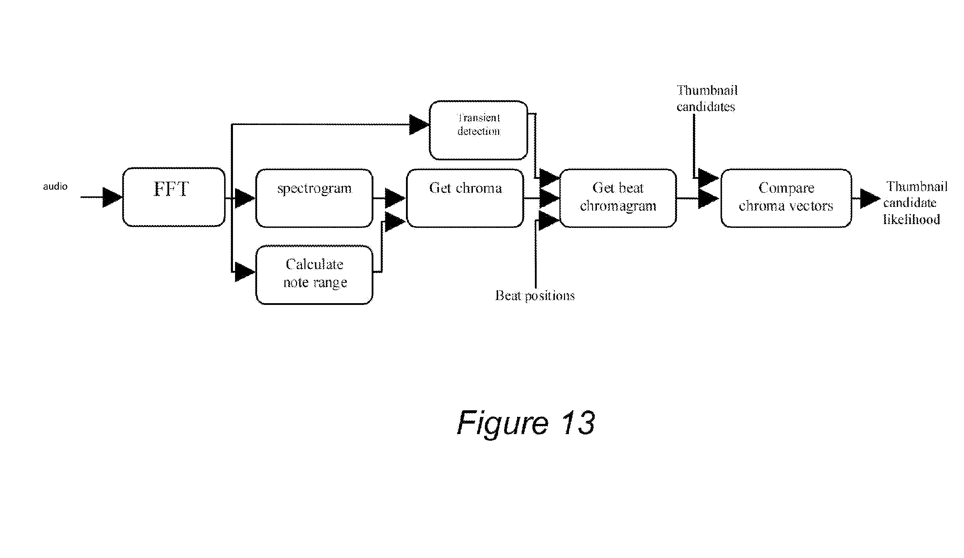

The chromagram analysis is shown in further detail in Figure 13. A spectrogram is first generated, by storing the magnitude response of the spectrum of each audio frame. A chroma analysis is then performed in a limited frequency range. The low end of the frequency range is obtained by calculating the lowest note in pitch present in the piece of music. Thus, noise introduced by percussive instruments in the low frequency range will be discarded in the analysis. The high end is set to 5000Hz, which covers the fundamental frequencies played by the piano. Next, a beat chromagram is generated, which combines together the chroma frames of each individual beat. Again, the only frames used within the beat segment are those which do not contain transient signals. Finally, chroma matrices starting at each thumbnail candidate are compared against other chroma matrices starting at the other thumbnail candidates. The number of rows used in the sub-chroma matrices is equal to 32 beats. The algorithm iteratively evaluates different hypotheses of the number of similar thumbnails in the song. This results in a different likelihood measure for each thumbnail candidate.

The chromagram analysis therefore provides beat representation, which only uses frames that do not contain transient signals, in order to improve the accuracy of the representation, and which uses a pitch detection algorithm in order to detect the lowest note in pitch present in the piece of music. Thus, noise introduced by percussive instruments in the low frequency range will be discarded in the analysis.

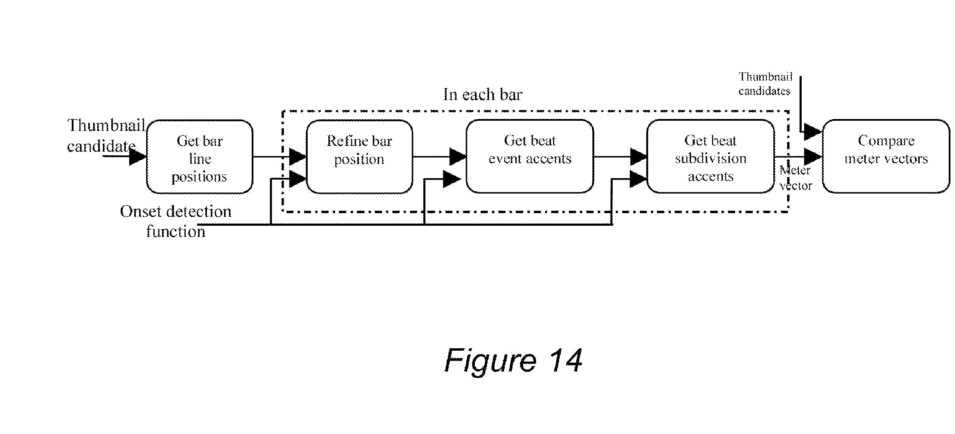

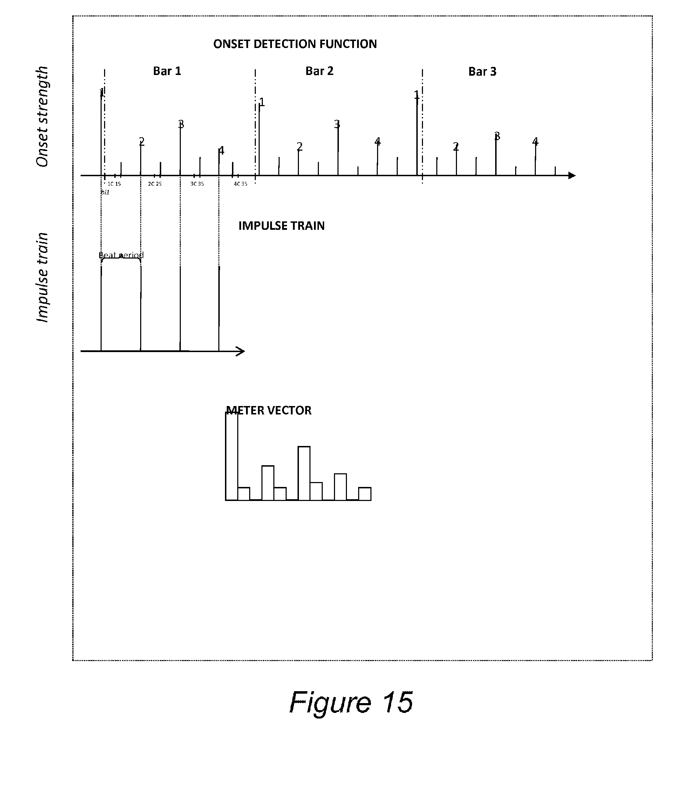

The metergram analysis is a novel representation, which encodes the metrical aspects of the input audio data. The different modules, which compose this analysis, are shown in further details in Figure 14. Firstly, a bar line tracking algorithm is used in order to split audio signals by segments of length equal to the musical bar length, wherein each segment starts at the bar line position. With reference to Figure 15, an onset detection function of the first 3 musical bars of a given piece of music played in a typical 4/4 time signature is depicted in the top plot. The beat number in each musical bar is labelled as "1","2","3" or "4" in the plot.

Following the bar line position estimation, the following process steps are performed in each musical bar.

The position of the musical bars is refined in order to correct errors introduced by the automatic bar line tracking algorithm. This is performed by correlating a periodic impulse train with the onset detection function of the musical bar in question. The impulses will be separated by the beat period of the piece of music and the onset detection function will only be evaluated at a region comprised within the region {bl-bp/10... bl+bp/10}, wherein bl and bp respectively correspond to the bar line and beat period. The frame at which the correlation between the impulse train and the shifted musical bar produces a maximum, will correspond to the refined bar line position. With reference to the example of Figure 15, the bar line position of "bar 1", denoted as b11, was estimated delayed from its real position (beat "1"). The multiplication of the train impulse shown in the middle plot with the bar onset detection function shifted a number of frames equal to the difference between the estimated and real bar line positions (b11 and beat "1" respectively) will therefore provide a maximum in the correlation. Accents of the beats comprised in the musical bar are extracted from the onset detection function. This is performed by extracting the most prominent value within a region centred at the expected beat positions. In order to allow deviations from perfect periodicities, a deviation from each region centre is allowed. Thus, the range for i^{th} beat is given by Ri={bp*(i-1)- bp/10...bp*(i-1)+ bp/10}.

The accent of common beat subdivisions is obtained from the onset detection function. For each beat of the musical bar, the value in the onset detection function at ½ and ⅓ of its beat period is extracted, which gives an indication of the use of simple and compound meter types respectively. With reference to the example of Figure 15, the locations at which the simple and compound subdivisions are extracted for beat "1" of "bar 1" are denoted as 1S and 1C respectively.

The above process steps result in a vector of length equal to two times the number of beats in the bar. With reference to the example of Figure 15, the metrical vector of "bar 1" is displayed in the bottom plot. This representation is used in order to compare the metrical properties of different audio thumbnail candidates at different parts of the song.

This novel analysis therefore encodes the different metrical levels comprised in music and is both robust to tempo changes and allows accurate comparison between different meter vectors.

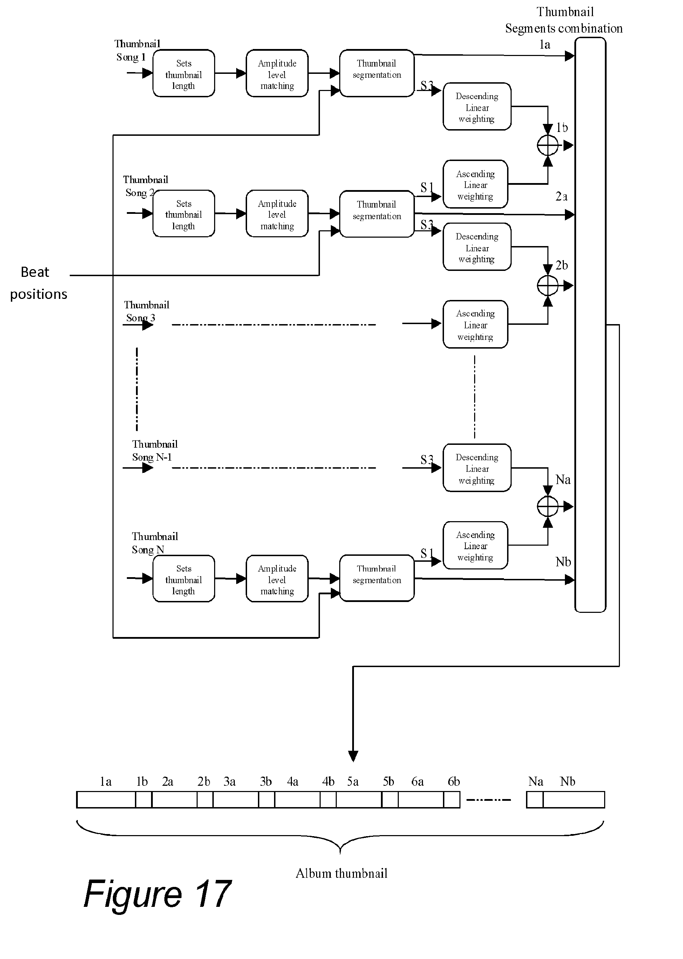

The above processes are applied to each individual input audio data, understood as a distinct song, however this embodiment also allows the processing of a representative sample of multiple input audio data, i.e. a plurality of distinct songs. If an album or an artist discography comprising more than one song is chosen as the input to the apparatus, a single audio thumbnail will be automatically generated. The resulting thumbnail will be described by a limited number of representative song thumbnails mixed into a single audio file. By way of example, online vendors can include the most popular or downloaded album/artist songs in such a mixed thumbnail. By contrast, the use of an album/artist thumbnail in a home user local library might only include the songs most listened to by a user. Figure 16 illustrates an embodiment of the apparatus for processing a plurality of songs, in the form of a logical array of functional blocks, and the process of mixing a number of song-respective representative samples, into a single, composite representative sample, hereinafter an 'album thumbnail' or 'artist thumbnail', is shown in Figure 17.

The length of each song-respective representative sample in the album thumbnail corresponds to a limited number of musical bars, with the final user application or context deciding the number of bars retained form the original song-respective representative sample. By way of example, album thumbnails in a home user local library context might be used by the user as a quick reminder of the sound of the library albums. In this case, the length of the song-respective representative sample might be limited to 2 musical bars. By contrast, an online music store might force the user to listen to a longer portion of each song of the mix, for instance 4 bars.

The amplitude level of the representative sample is monitored in order to avoid signal clipping and to aid amplitude matching between the constituent song-respective representative samples of the resulting mix.

The song-respective representative sample is split into 3 different segments S1, S2 and S3, wherein S1 correspond to a segment starting at the beginning of the song-respective representative sample, and S3 correspond to a segment finishing at the end of the song-respective representative sample. S1 and S3 segments in each representative sample will be mixed with the previous and next song-respective representative sample, respectively. The length of the first segment S1 will be set by using the shortest beat period between the current and previous song thumbnails. By contrast, the length of the second segment S3 will be set by using the shortest beat period between the current and next song thumbnails.

In order to ensure a smooth transition between the song-respective representative samples of the mix, cross - fading techniques are used, wherein segments S1 and S3 in each song-respective representative sample will be mixed with segment S3 in the previous and segment S 1 in the next thumbnails respectively. In order to achieve this result, S1 and S3 will be multiplied by a descending and an ascending linear function respectively. Figure 18 illustrates the above cross - fading technique process, wherein the segments S1 and S3 in each song-respective representative sample are labelled, and wherein the linear functions applied to those segments are also shown. The results of both multiplications are added together, in order to form a single segment.

The resulting song-respective representative samples are then finally combined in order to form a single album thumbnail.

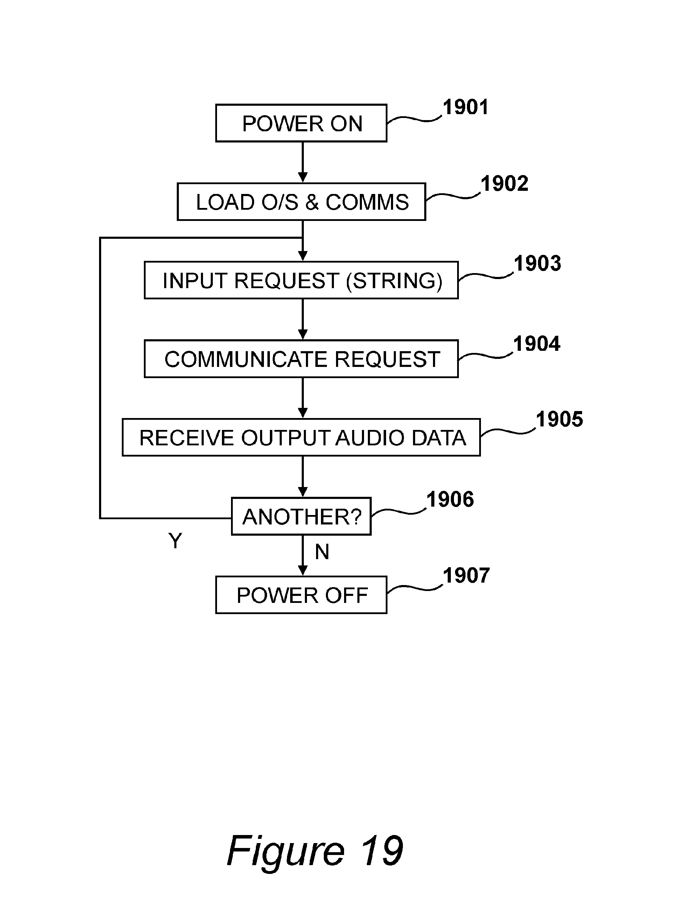

Figure 19 details the procedural steps according to which any of remote terminals 209, 210, 211 requests output audio data from terminal 201.

Any of terminals 209, 210, 211 is initially powered on at step 1901, whereby the operating system is loaded in memory 303 from permanent storage 304 for configuring the terminal with essential functionality, including network connectivity at step 1902. At step 1903, the user of the terminal inputs a request for output audio data, for instance by inputting a search or query string of alphanumerical characters representing a song, an album of songs, an artist, a musical genre, or type or the like or by selecting a link representing the network address of stored output audio data 708 at terminal 201 within a network, for instance the Internet 208. The request is communicated to terminal 201 at step 1904, at which it is received at step 507. The request is eventually replied to in accordance with the processing steps detailed hereinbefore and the terminal receives output audio data 708 in reply at step 1905. A question is subsequently asked at step 1906 as to whether the user of the terminal wishes to input another request. If the question is answered in the affirmative, then control returns to step 1903 for inputting the further request. Alternatively, the question of step 1906 is answered negatively and the user may eventually cease operation of the terminal by switching it off at step 1907.

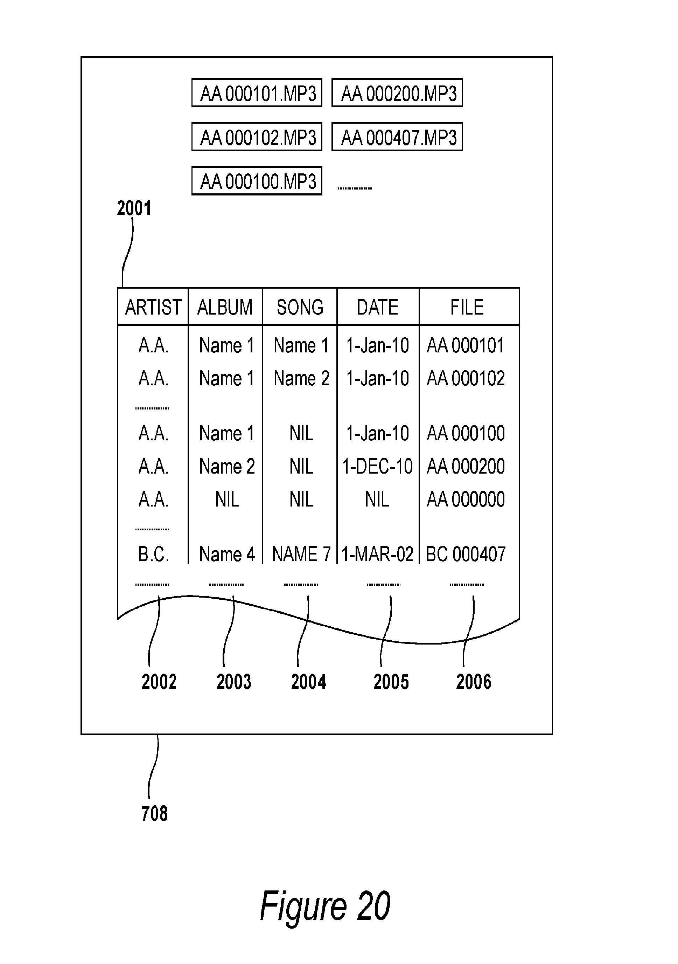

Figure 20 provides a graphic illustration of stored output audio data 708. In a preferred embodiment, the representative samples constituting output audio data 708 are stored as audio files according to any preferred format, a common example of which is MPEG Layer-III, and are described as thumbnails. Depending upon whether the representative sample is for a respective song, album or group of songs or discography of an artist, then the thumbnail is a song thumbnail, an album thumbnail or an artist thumbnail, respectively. In order to avoid unnecessary data processing, any representative sample computed for a song, album or artist is referenced in a database-like structure 2001, so that requests for audio thumbnails can be replied to without the need to reprocess the same input audio data time and again. Accordingly, structure 2001 preferably comprises sufficient thumbnail reference or identification data, organised logically, in order to quickly and accurately determine which thumbnail best answers a request, if it has already been produced. Thumbnail reference or identification data may for instance include the artist's particulars 2002, the album title or similar particulars 2003 as a part of which a song was released, the song title or similar particulars 2004, a date, datum or similar temporal reference 2005 and a audio thumbnail unique identifier 2006. The structure of the unique identifier 2006 preferably allows any audio thumbnail generated for any audio content, whether individual or plural songs, albums, an entire discography or any arbitrary combination thereof, of a particular artist to be uniquely identified in a logical manner.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. Apparatus for automatically extracting a representative sample from input audio data, comprising storage means and audio data processing means, including
a section processing module for identifying audio thumbnail candidates;
a chromagram processing module for identifying a first representative sample of the input audio;
a metre processing module for identifying a second representative sample of the input audio data;
wherein each module identifies the representative sample in parallel, and outputs a respective representative sample; and
the audio data processing means combines the plurality of samples as the representative sample and stores the representative sample in the storage means as a plurality of artist/album/song thumbnails.

2. The apparatus according to claim 1, wherein the audio data includes at least one song.

3. The apparatus according to claim 1, wherein the audio data is selected from the group comprising a song, several songs of an artist, several songs of different artists, an album of songs of an artist, a plurality of albums of songs of an artist, a plurality of albums of songs of different artist, or any combination thereof.

4. The apparatus of claim 1 wherein the thumbnail comprises a plurality of fragments of the most representative song thumbnails of an album or artist discography, which are seamlessly blended together, such that the transition between song thumbnails is performed in a continuous fashion.

5. The apparatus of claim 1 wherein the audio thumbnail length is variable and comprises means to be selected at a desired length.

6. The apparatus according to claim 1 comprising processing means to cross fade successive audio thumbnails.

7. The apparatus according to claim 1 wherein audio thumbnail amplitude levels are matched with each other.

8. The apparatus according to claim 1 wherein the section processing module comprises means to track both changes in instrumentation and song dynamics present in the audio data.

9. The apparatus according to claim 1 wherein the section processing module comprises means to detect only frames within a beat segment that do not contain transient signals.

10. The apparatus according to claim 1 wherein the chromagram processing module provides beat chromagram representation which only uses frames that do not contain transient signals.

11. The apparatus of claim 10 wherein the beat chromagram representation utilises a pitch detection algorithm in order to detect the lowest note in pitch present in audio data, such that noise introduced by percussive instruments in the low frequency range are discarded.

12. The apparatus according to claim 1 wherein the metre processing module comprises a representation that encodes the different metrical levels of audio data, such that said representation is robust to tempo changes and allows accurate comparison between different meter vectors.

13. The apparatus according to any previous claim, wherein the audio data includes analogue or digital audio data.

14. The apparatus according to claim 13, further comprising optical data reading and writing means, wherein digital audio data may be obtained from the optical data reading means and the representative sample may be output to the optical data writing means.

15. The apparatus according to claim 13 or 14, further comprising communication means, wherein digital audio data may be obtained from at least one remote terminal means and a representative sample may be communicated to at least one remote terminal via the communication means.
